# EUROPEAN PATENT SPECIFICATION

(11) **EP 1 541 983 B1**
(45) Date of publication and mention of the grant of the patent: **10.11.2010**
(21) Application number: 04772855.5
(22) Date of filing: 31.08.2004
(51) Int. Cl.: G01L 3/10, G01B 7/30, B62D 5/06, B62D 5/04

(54) **DEVICE FOR DETECTING ROTATION ANGLE AND TORQUE**
EINRICHTUNG ZUM ERKENNEN VON DREHWINKELN UND DREHMOMENTEN
DISPOSITIF POUR DETERMINER UN ANGLE DE ROTATION ET UN COUPLE

(30) Priority: 02.09.2003 JP 2003309795
(43) Date of publication of application: 15.06.2005
(73) Proprietor: Panasonic Corporation, Kadoma-shi Osaka 571-8501 (JP)
(72) Inventor: UEHIRA, Kiyotaka, Osaka-shi, Osaka 533-0004 (JP); OIKE, Koji, Otokuni-gun, Kyoto 618-0091 (JP); USHIHARA, Masaharu Matsushita Electric Ind. Co,Ltd, Chuo-ku, Osaka-shi Osaka 540-6319 (JP)
(74) Representative: Grünecker, Kinkeldey, Stockmair & Schwanhäusser Anwaltssozietät
(86) International application number: PCT/JP2004/012906
(87) International publication number: WO 2005/024368

(56) References cited:
- WO-A1-03/106953
- DE-A1- 4 028 246
- DE-A1- 19 834 322
- JP-A- 2002 522 760
- JP-B2- 3 307 317
- JP-U- 60 058 950
- US-A1- 2003 056 583
- US-B1- 6 578 437

## Description

### Technical Field

The present invention relates to a detector, mounted to a torsion bar, for detecting a rotation angle and torque simultaneously. The detector of the present invention is used in a power steering of cars.

### Background Art

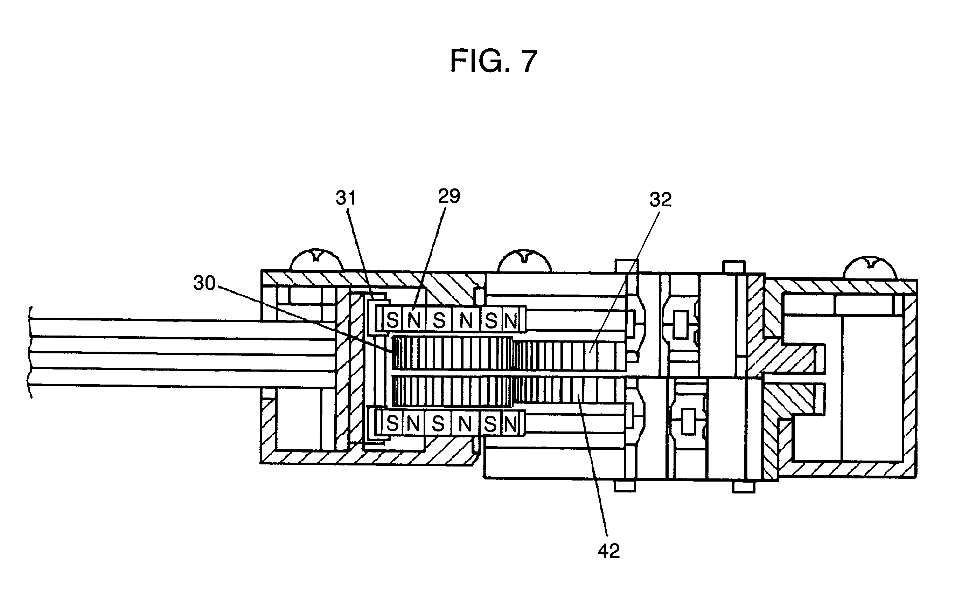

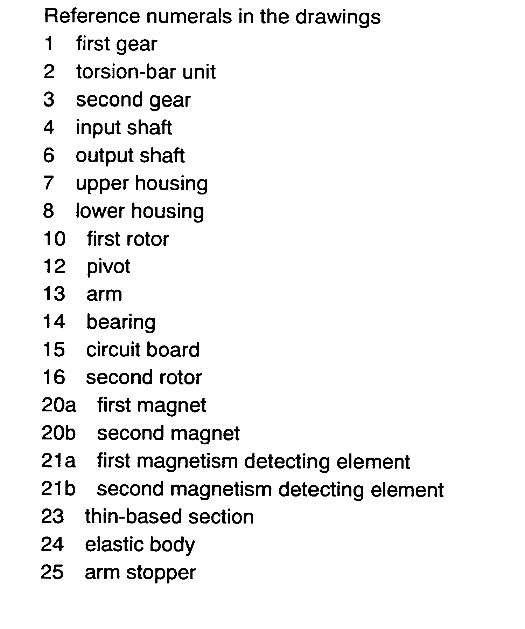

Fig. 7 (from Japan Patent Unexamined Publication H11-194007) shows a conventional detector of a rotation angle and torque. Gear 32 is mounted to an input shaft (not shown) of a torsion bar. Gear 30 engaging with gear 32 includes circular-shaped code plate 29 having numbers of magnetic poles. Rotation of the input shaft entails code plate 29 to rotate. Magnetism detecting element 31 counts the number of magnetic poles rotating, thereby detecting a rotation angle of the input shaft. Gear 42 is mounted to an output shaft (not shown) of the torsion bar, and a rotation angle of the output shaft is detected in the same manner discussed above. When torque works to the torsion bar to produce torsion, comparison of the rotation angles between the input shaft and the output shaft will detect torque.

However, obtaining a more accurate rotation angle requires code plate 29 to have more numbers of magnetic poles, so that the detector becomes bulky. Placement of magnetism detecting element 31 on code plate 29 along the radial direction also enlarges the detector.
Further examples of systems for detecting rotation angles and /or torques can be found in US 6, 578, 437 B1 and DE 198 34 322 A1. **Disclosure of the Invention**

A detector of a rotation angle and torque of the present invention comprises the following elements:
a first and a second gears;
a first and a second rotors engaging with the first and the second gears respectively;
a first and a second magnets rigidly mounted at the centers of the first and the second rotors respectively;
a circuit board disposed between the first and the second rotors;
a first magnetism detecting element disposed on a first face of the circuit board at a place confronting the first magnet;
a second magnetism detecting element disposed on a second face of the circuit board at a place confronting the second magnet; and
a housing accommodating the foregoing structural elements

### Brief Description of the Drawings

Fig. 1A shows a top view of a detector in accordance with a first exemplary embodiment of the present invention.
Fig. 1B shows a front sectional view of the detector shown in Fig. 1.
Fig. 1C shows a lateral sectional view of the detector shown in Fig. 1.
Fig. 2 shows a perspective exploded view illustrating a structure of an arm of the detector shown in Fig. 1.
Fig. 3 shows a perspective exploded view illustrating a structure of an arm.
Fig. 4 shows a plan view illustrating a structure of another arm.
Fig. 5A shows a plan view of an arm stopper.
Fig. 5B shows a plan view of an arm brought into contact with the arm stopper.
Fig. 6A shows a sectional view illustrating a loose engagement between a first gear and a second gear.
Fig. 6B shows a sectional view illustrating a rotation stopper disposed between a first gear and a second gear.
Fig. 7 shows a conventional detector of a rotation angle and torque.

### Detailed Description of Preferred Embodiments

Exemplary embodiments of the present invention are demonstrated hereinafter with reference to the accompanying drawings.

### Exemplary Embodiment 1

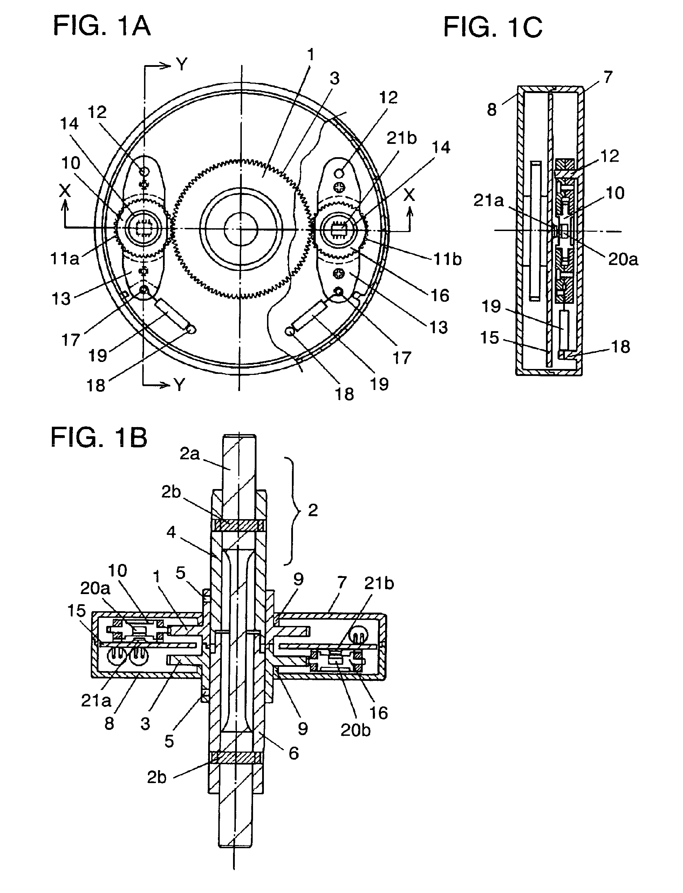

Figs. 1A, 1B and 1C show a top view, a front sectional view, and a lateral sectional view of a detector of a rotation angle and torque of the present invention.

First gear 1 is fixed to input shaft 4 of torsion-bar unit 2 with screw 5. Second gear 3 is fixed to output shaft 6 of torsion-bar unit 2 with screw 5. A lower end of first gear 1 engages loosely with an upper end of second gear 3. First gear 1 and second gear 3 are supported respectively by bearing 9 equipped to upper housing 7 and lower housing 8, and accommodated in housings 7 and 8.

Input shaft 4 is fixed to an upper end of torsion bar 2a with spring-pin 2b, and output shaft 6 is fixed to a lower end of torsion bar 2a with spring-pin 2b. A lower end of input shaft 4 engages loosely with an upper end of output shaft 6.

Transmission of torque through torsion-bar unit 2 twists torsion bar 2a, so that a difference in rotation angles between input shaft 4 and output shaft 6 is produced.

First gear 1 engages with gear 11a of first rotor 10, which is supported by bearing 14 of arm 13 mounted to upper housing 7 such that arm 13 can rotate on pivot 12. Spring 19 has tensile force working on tip 17 of arm 13 and urging first rotor 10 mounted on arm 13 against first gear 1, so that backlash of the gear can be reduced.

Second gear 3 engages with gear 11b of second rotor 16, which is disposed opposite to first rotor 10 with circuit board 15 in between, and is mounted on an arm in lower housing 8. This arm has the same construction as arm 13.

First rotor 10 and second rotor 16 include first magnet 20a and second magnet 20b fixed at their centers respectively, and each one of the magnets has a magnetic field along the radial direction of the rotor. Both of magnets 20a and 20b are magnetized in one pole pair. Circuit board 15 is disposed between first rotor 10 and second rotor 16, and board 15 has first magnetism detecting element 21a on its first face so that element 21a confronts first magnet 20a. Board 15 also has second magnetism detecting element 21b on its second face so that element 21b confronts second magnet 20b.

Since circuit board 15 is equipped with first magnetism detecting element 21a and second one 21b on its both sides, so that board 15 can be accommodated in a compact space between upper and lower housings 7, 8. This construction is thus effective to downsize the detector.

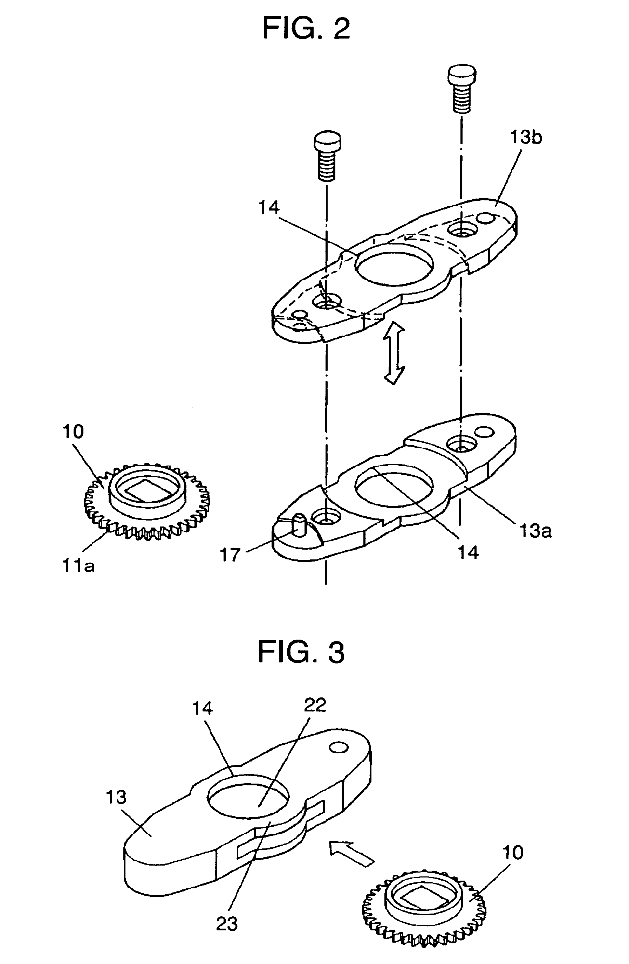

Fig. 2 shows an exploded view of arm 13. First rotor 10 having gear 11a is rotatably supported by bearing 14 between lower arm 13a and upper arm 13b. As previously discussed, second rotor 16 having gear 11b is integrated into the arm which has the same construction as arm 13.

In Fig. 1B, first magnetism detecting element 21a detects a change in the magnetic field of first magnet 20a, so that a rotation angle of first rotor 10 can be detected. In a similar manner, second magnetism detecting element 21b detects a change in the magnetic field of second magnet 20b, so that a rotation angle of second rotor 16 can be detected.

Appropriate setting of the number of teeth of first gear 1, second gear 3, gear 11a of first rotor 10, and gear 11b of second rotor 16 allows producing a relative change in respective rotation angles of first rotor 10 and second rotor 16. This preparation thus allows detecting a rotation angle (absolute angle of multi-rotations) even if the rotation angle of input shaft 4 exceeds one rotation (360 degrees).

When torsion bar 2a is twisted, and a relative angle change in the rotation angle occurs between input shaft 4 and output shaft 6, the change amount in rotation is proportionate to torque working on torsion bar 2a. Thus removal of a detection signal of an absolute rotation angle from detection signals supplied from first and second detecting elements 21a and 21b will find the torque working between the input and output shafts.

In general, a change amount due to torsion in rotation of torsion bar 2a is as little as not more than 3 degrees, so that an engagement accuracy of teeth of gears becomes critical for improving a detection accuracy of detectors. As shown in Fig. 1A, the detector of the present invention employs elastic member 19, e.g. a spring, and this spring urges first rotor 10 (or second rotor 16) against first gear 1 (or second gear 3), thereby reducing an error accompanying backlash of the gear.

As shown in Fig. 2, arm 13 supports first rotor 10 (or second rotor 16) with bearings on both the sides of the rotor, so that the force of elastic member 19 works on the teeth faces of first gear 1 (or second gear 3) at right angles. As a result, an error due to a slant of the gear can be prevented.

A power steering device of cars uses the detector of the present invention, so that a rotation angle (absolute angle) and torque produced by operating the steering can be detected simultaneously with high accuracy, and the detector can be in a compact structure,

### Exemplary Embodiment 2

Fig. 3 shows an exemplary embodiment of an arm of the detector of the present invention. Similar elements to the previous embodiment have the same reference marks and the descriptions thereof are omitted here. Arm 13 is formed from resin in one body and has space 22 as well as bearing 14 at its center for accommodating and supporting first rotor 10. Thin-based section 23 is formed around bearing 14. Since thin-based section 23 can be transformed against the elasticity of the resin for accommodating first rotor 10 in arm 13, the construction of arm 13 of this second embodiment becomes so simple that arm 13 can be assembled in a short time.

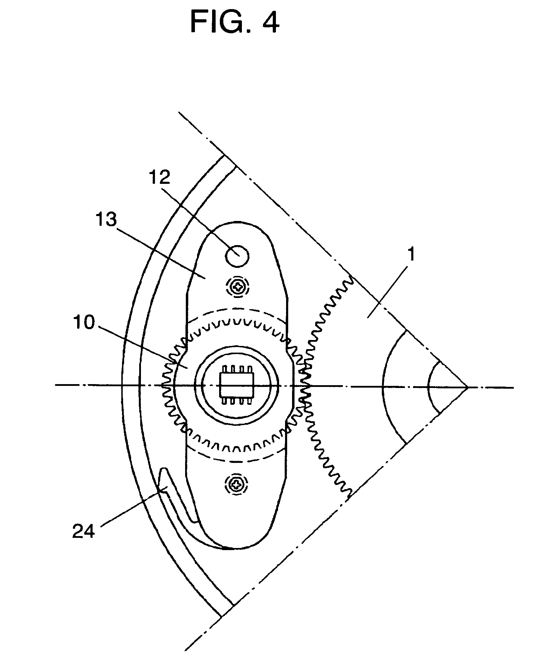

Fig. 4 shows another embodiment of the arm, for instance, arm 13 made from polyacetal resin has elastic slip 24 integrated therein. Elastic slip 24 urges first rotor 10, mounted to arm 13 which can rotate around pivot 12, against first gear 1, thereby reducing an error accompanying backlash of the gear.

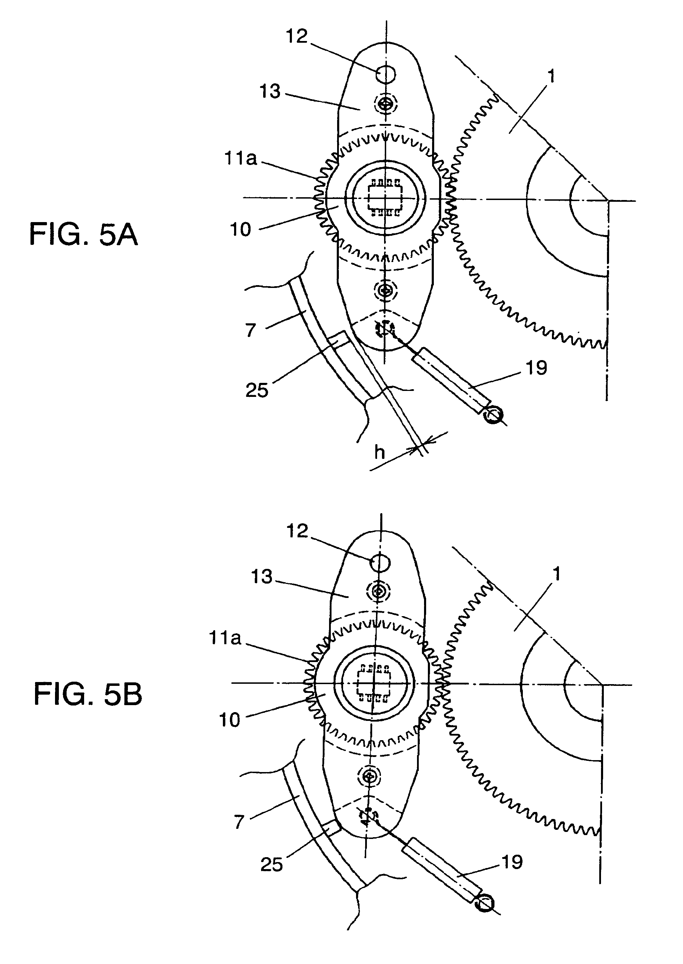

Figs. 5A and 5B shows still another embodiment of the arm. Arm stopper 25 is formed on an inner face of upper case 7 near a tip of arm 13. Space h (Fig. 5A) between arm stopper 25 and arm 13 is smaller than an intermeshing amount between gear 11a of first rotor 10 and first gear 1. Thus even if arm 13 is moved by, e.g. vibrations, arm stopper 25 stops the move (Fig. 25), so that the intermesh between gears is not come out. This structure allows preventing first magnet 20a of first rotor 10 from deviating from the rotating position initially set, thereby avoiding an accident. As a result, the reliability of the detector can be improved.

### Exemplary Embodiment 3

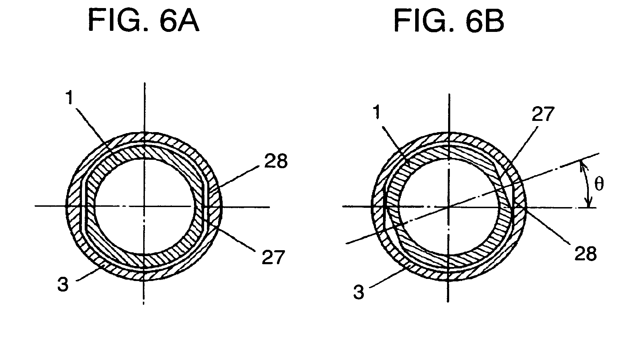

As previously discussed, the lower end of first gear 1 loosely engages with the upper end of second gear 3 (ref. Fig. 1C). Fig. 6A shows a sectional view of this loose engagement. As shown in Fig. 6B, rotation of first gear 1 with respect to second gear 3 causes a collision between these two gears at angle θ, thereby stopping the rotation. In other words, a shape of the loose engagement viewed from the sectional view constructs a rotation stopper which limits the rotation of first gear 1 and second gear 3 within a predetermined angle. The rotation stopper prevents torsion bar 2a from being twisted excessively. The rotation stopper is not limited to a shape shown in Fig 6, and any shape as long as it can limit a relative rotation between input shaft 4 and output shaft 6 within a predetermined angle, it can produce a similar advantage to what is discussed above.

### Industrial Applicability

The present invention provides a detector of a rotation angle and torque. This detector is suited to a power steering of cars.

## Claims

1. A detector of a rotation angle and torque, the detector comprising:
a first gear (1);
a first rotor (10) including a gear (11a) engaging with the first gear (1);
a first magnet (20a) rigidly mounted to a center of the first rotor (10);
a second gear (3);
a second rotor (16) including a gear (11 b) engaging with the second gear (3);
a second magnet (20b) rigidly mounted to a center of the second rotor (16);
**characterized in that:**
said detector further comprises:
a circuit board (15) disposed between the first rotor (1) and the second rotor (3);
a first magnetism detecting element (21 a) disposed on a first face of the circuit board (15) at a place confronting the first magnet (20a);
a second magnetism detecting element (21 b) disposed on a second face of the circuit board (15) at a place confronting the second magnet (20b); and
a housing accommodating the foregoing structural elements.

2. The detector of claim 1 further comprising:
an arm (13) including a bearing (14) which supports the first rotor (10),
and
an elastic body (19; 24) which urges the arm (13), wherein the elastic body (19; 24) urges the arm (13), so that the first rotor (10) is urged against the first gear (1).

3. The detector of claim 1 further comprising:
an arm (13) including a bearing (14) which supports the second rotor (16),
an elastic body (19; 24) which urges the arm (13), wherein the elastic body (19; 24) urges the arm (13), so that the second rotor (16) is urged against the second gear (3).

4. The detector of claim 2 or 3, wherein the arm (13) has a thin-based section molded from resin around the bearing (14).

5. The detector of claim 2 or 3, wherein the elastic body (19; 24) is molded from resin integrally with the arm (13).

6. The detector of claim 2 further comprising an arm stopper (25) for limiting a movement of the arm (13), wherein the arm stopper (25) limits the arm (13) to move within a smaller area than dimensions of an intermeshing between the first gear (1) and the gear (11a) of the first rotor (10).

7. The detector of claim 3 further comprising an arm stopper (25) for limiting a movement of the arm (13), wherein the arm stopper (25) limits the arm (13) to move within a smaller area than dimensions of an intermeshing between the second gear (3) and the gear (11b) of the second rotor (16).

8. The detector of claim 1, wherein the shape of the engagement between said first gear (1) and said second gear (3) constructs a rotation stopper which limits the rotation of said first gear (1) and said second gear (3) within a predetermined angle (θ).

## Patentansprüche

1. Vorrichtung zum Erfassen von Drehwinkel und Drehmoment, wobei die Vorrichtung zum Erfassen umfasst:
ein erstes Zahnrad (1);
einen ersten Rotor (10), der ein Zahnrad (11a) enthält, das mit dem ersten Zahnrad (1) in Eingriff ist;
einen ersten Magneten (20a), der starr an einem Mittelpunkt des ersten Rotors (10) angebracht ist;
ein zweites Zahnrad (3);
einen zweiten Rotor (16), der ein Zahnrad (11 b) enthält, das mit dem zweiten Zahnrad (3) in Eingriff ist;
einen zweiten Magneten (20b), der starr an einem Mittelpunkt des zweiten Rotors (16) angebracht ist, **dadurch gekennzeichnet, dass:**
der Detektor des Weiteren umfasst:
eine Leiterplatte (15), die zwischen dem ersten Rotor (1) und dem zweiten Rotor (3) angeordnet ist;
ein erstes Element (21 a) zum Erfassen von Magnetismus, das an einer ersten Fläche der Leiterplatte (15) an einer Stelle angeordnet ist, die dem ersten Magneten (20a) gegenüberliegt;
ein zweites Element (21 b) zum Erfassen von Magnetismus, das an einer zweiten Fläche der Leiterplatte (15) an einer Stelle angeordnet ist, die dem zweiten Magneten (20b) gegenüberliegt; und
ein Gehäuse, das die aufgeführten strukturellen Elemente aufnimmt.

2. Erfassungsvorrichtung nach Anspruch 1, die des Weiteren umfasst:
einen Arm (13), der ein Lager (14) enthält, das den ersten Rotor (10) trägt, und
einen elastischen Körper (19; 24), der den Arm (13) drückt, wobei der elastische Körper (19; 24) den Arm (13) so drückt, dass der erste Rotor (10) gegen das erste Zahnrad (1) gedrückt wird.

3. Erfassungsvorrichtung nach Anspruch 1, die des Weiteren umfasst:
einen Arm (13), der ein Lager (14) enthält, das den zweiten Rotor (16) trägt,
einen elastischen Körper (19; 24), der den Arm (13) drückt, wobei der elastische Körper (19; 24) den Arm (13) so drückt, dass der zweite Rotor (16) gegen das zweite Zahnrad (3) gedrückt wird.

4. Erfassungsvorrichtung nach Anspruch 2 oder 3, wobei der Arm (13) einen Abschnitt mit dünner Basis aufweist, der aus Harz um das Lager (14) herum geformt ist.

5. Erfassungsvorrichtung nach Anspruch 2 oder 3, wobei der elastische Körper (19; 24) integral mit dem Arm (13) aus Harz geformt ist.

6. Erfassungsvorrichtung nach Anspruch 2, die des Weiteren einen Arm-Anschlag (25) zum Einschränken einer Bewegung des Arms (13) umfasst, wobei der Arm-Anschlag (25) den Arm (13) so einschränkt, dass er sich innerhalb eines Bereiches bewegt, der kleiner ist als Abmessungen eines Eingriffs zwischen dem ersten Zahnrad (1) und dem Zahnrad (11a) des ersten Rotors (10).

7. Erfassungsvorrichtung nach Anspruch 3, die des Weiteren einen Arm-Anschlag (25) zum Einschränken einer Bewegung des Arms (13) umfasst, wobei der Arm-Anschlag (25) den Arm (13) so einschränkt, dass er sich innerhalb eines Bereiches bewegt, der kleiner ist als Abmessungen eines Eingriffs zwischen dem zweiten Zahnrad (3) und dem Zahnrad (11b) des zweiten Rotors (16).

8. Erfassungsvorrichtung nach Anspruch 1, wobei die Form des Eingriffs zwischen dem ersten Zahnrad (1) und dem zweiten Zahnrad (3) einen Dreh-Anschlag schafft, der die Drehung des ersten Zahnrades (1) und des zweiten Zahnrades (3) auf einen vorgegebenen Winkel (θ) beschränkt.

## Revendications

1. Détecteur d'angle et de couple de rotation, le détecteur comprenant :
un premier engrenage (1),
un premier rotor (10) incluant un engrenage (11a) en prise avec le premier engrenage (1),
un premier aimant (20a) monté de façon rigide sur un centre du premier rotor (10),
un second engrenage (3),
un second rotor (16) incluant un engrenage (11b) en prise avec le second engrenage (3),
un second aimant (20b) monté de façon rigide sur un centre du second rotor (16),
**caractérisé en ce que :**
ledit détecteur comprend en outre :
une carte imprimée (15) disposée entre le premier rotor (10) et le second rotor (16),
un premier élément de détection de magnétisme (21a) disposé sur une première face de la carte imprimée (15) à un endroit faisant face au premier aimant (20a),
un second élément de détection de magnétisme (21b) disposé sur une seconde face de la carte imprimée (15) à un endroit faisant face au second aimant (20b), et
un boîtier logeant les éléments de structure qui précèdent.

2. Détecteur selon la revendication 1, comprenant en outre :
un bras (13) incluant un palier (14) qui supporte le premier rotor (10), et
un corps élastique (19 ; 24) qui sollicite le bras (13), dans lequel le corps élastique (19 ; 24) contraint le bras (13) de telle sorte que le premier rotor (10) soit pressé contre le premier engrenage (1).

3. Détecteur selon la revendication 1, comprenant en outre :
un bras (13) incluant un palier (14) qui supporte le second rotor (16),
un corps élastique (19 ; 24) qui sollicite le bras (13), dans lequel le corps élastique (19 ; 24) contraint le bras (13) de telle sorte que le second rotor (16) soit pressé contre le second engrenage (3).

4. Détecteur selon la revendication 2 ou 3, dans lequel le bras (13) présente une section de base mince moulée à partir de résine autour du palier (14).

5. Détecteur selon la revendication 2 ou 3, dans lequel le corps élastique (19 ; 24) est moulé à partir de résine en une seule pièce avec le bras (13).

6. Détecteur selon la revendication 2, comprenant en outre une butée (25) de bras permettant de limiter le mouvement du bras (13), dans lequel la butée (25) de bras limite le mouvement du bras (13) dans une zone plus petite que les dimensions de l'engrènement mutuel du premier engrenage (1) et de l'engrenage (11a) du premier rotor (10).

7. Détecteur selon la revendication 3, comprenant en outre une butée (25) de bras permettant de limiter le mouvement du bras (13), dans lequel la butée (25) de bras limite le mouvement du bras (13) dans une zone plus petite que les dimensions de l'engrènement mutuel du second engrenage (3) et de l'engrenage (11b) du second rotor (16).

8. Détecteur selon la revendication 1, dans lequel la forme de la prise entre ledit premier engrenage (1) et ledit second engrenage (3) établit une butée de rotation qui limite la rotation dudit premier engrenage (1) et dudit second engrenage (3) dans les limites d'un angle prédéterminé (6).
